# EUROPEAN PATENT APPLICATION

(11) **EP 4 556 975 A1**
(43) Date of publication of application: **21.05.2025**
(21) Application number: 23210403.4
(22) Date of filing: 16.11.2023
(51) Int. Cl.: G02B 6/44, G02B 6/38

(54) **FIBER OPTIC CABLE MANAGEMENT APPARATUS AND TERMINAL**

(71) Applicant: Corning Research And Development Corporation, Corning, New York 14831 (US)
(72) Inventor: KLAK, Robert Tomasz, 98220 Zdunska Wola (PL); NITKA, Grzegorz, 90-752 Lodz (PL)
(74) Representative: Reddie & Grose LLP

(57) **Abstract**

This application relates to a fiber optic cable management apparatus and terminal. The fiber optic cable management apparatus comprises an adapter frame having a plurality of adapter openings arranged in a row; and a plurality of fiber optic adapters held in the plurality of adapter openings so as to be arranged in a row, the plurality of fiber optic adapters being configured to receive a predetermined number of fiber optic connectors of a first type. The adapter frame further comprises: a plurality of parking elements arranged in a row that is adjacent to the row of fiber optic adapters, the plurality of parking elements being configured to receive the predetermined number of fiber optic connectors of the first type in a manner such that each of the fiber optic connectors can be stored adjacent to one of the fiber optic adapters.

## Description

### TECHNICAL FIELD

This application relates to fiber optic cable management apparatus and terminal, and in particular to fiber optic cable management apparatus including an adapter frame having integrated parking for unused fiber optic connectors.

### BACKGROUND ART

Fiber optic terminals for telecommunication networks, such as multi-dwelling unit (MDU) terminals, are designed with different solutions and technologies for the fiber management section. For example, various types and designs of patch panels or adapter banks are available. However, such known fiber management devices commonly face a number of drawbacks.

For example, known fiber management devices do not typically include any mechanisms for parking of unused fiber optic connectors. Often this is because of the lack of space to accommodate such additional features within the fiber optic terminal, especially in smaller terminals with more compact configurations.

In fiber management devices where dedicated spaces for parking unused connectors are provided, it can prove difficult to access the parking locations within the fiber optic terminal, and parked connectors can often collide with other components inside the fiber optic terminal. Further, such parking mechanisms often require additional fiber optic slack to be introduced, to allow movement of the fiber optic connector from the in use location (e.g. a fiber optic adapter) to the parking location, especially when there are multiple possible in use locations within the terminal (e.g. multiple adapters located at numerous points on a patch panel). Such additional slack is undesirable, as it can impede access to other components within the fiber optic terminal. The extra slack can be stored within a dedicated storage location within the fiber management device or terminal, however this will take up additional space within the terminal.

Improved fiber management apparatuses and terminals are desired that enable simplified and space-efficient parking of unused fiber optic connectors.

### SUMMARY OF THE INVENTION

The invention is defined by the independent claims, to which reference should now be made. Advantageous features are set out in the dependent claims.

According to a first aspect of the invention, a fiber optic cable management apparatus is provided. The fiber optic cable management apparatus comprises an adapter frame having a plurality of adapter openings arranged in a row; and a plurality of fiber optic adapters held in the plurality of adapter openings so as to be arranged in a row, the plurality of fiber optic adapters being configured to receive a predetermined number of fiber optic connectors of a first type. The adapter frame further comprises: a plurality of parking elements arranged in a row that is adjacent to the row of fiber optic adapters, the plurality of parking elements being configured to receive the predetermined number of fiber optic connectors of the first type in a manner such that each of the fiber optic connectors can be stored adjacent to one of the fiber optic adapters.

Optionally, each fiber optic adapter of the plurality of fiber optic adapters is configured to receive one or more of the fiber optic connectors in a first orientation; and the plurality of parking elements are configured to receive the fiber optic connectors in the same first orientation.

Optionally, the adapter frame comprises a panel wall defining a plane of the adapter frame, and wherein each parking element of the plurality of parking elements comprises one or more wall sections formed integrally with and protruding away from panel wall and forming a socket for receiving one of the fiber optic connectors.

Optionally, each parking element comprises a stop feature within the socket configured to prevent insertion of a fiber optic connector into the socket beyond the stop feature.

Optionally, each parking element comprises one or more engagement elements for engaging with at least one of a latch, protrusion or indent on the fiber optic connector of the first type.

Optionally, each fiber optic adapter includes at least one adapter engagement element for engaging with at least one of a latch, protrusion or indent on the fiber optic connector of the first type; and each parking element is arranged with the one or more engagement elements in the same orientation as the at least one adapter engagement element of the fiber optic adapter that is adjacent to the parking element.

Optionally, either: each of the adapter openings is configured to receive a simplex fiber optic adapter, and each adapter opening has a single corresponding parking element; or each of the adapter openings is configured to receive a duplex fiber optic adapter, and each adapter opening has a pair of corresponding parking elements.

Optionally, the fiber optic connectors of the first type are LC connectors; or the fiber optic connectors of the first type are SC connectors.

Optionally, the row of adapter openings and the row parking elements run in parallel along a longitudinal axis of the adapter frame.

Optionally, the fiber optic cable management apparatus further comprises a mount, wherein the adapter frame is configured for coupling to the mount such that the adapter frame is movable relative to the mount between a stowed position and a working position.

Optionally, the mount comprises a slot, and the adapter frame comprises a pin configured to engage with the slot to couple the adapter frame to the mount; wherein the pin is configured to slide from a first end of the slot to a second end of the slot as the adapter frame is moved from the stowed position to the working position.

Optionally, the adapter frame is rotatable relative to the mount when the pin is positioned at the second end of the slot; and moving the adapter frame from the stowed position to the working position includes rotating the adapter frame after the pin has been slid to the second end of the slot.

Optionally, the adapter frame comprises a locking feature configured to engage with a corresponding locking feature on the mount when the adapter frame is in the working position, to releasably secure the adapter frame in the working position.

Optionally, the adapter frame comprises one or more retaining features configured to engage with one or more corresponding retaining features on the mount when the adapter frame is in the stowed position, to releasably secure the adapter frame to the mount in the stowed position.

According to a second aspect of the invention, a fiber optic cable management terminal is provided. The fiber optic cable management terminal comprises: a housing; and at least one fiber optic cable management apparatus coupled to the housing or integrally formed with the housing. The fiber optic cable management apparatus comprises: an adapter frame having a plurality of adapter openings arranged in a row; and a plurality of fiber optic adapters held in the plurality of adapter openings so as to be arranged in a row, the plurality of fiber optic adapters being configured to receive a predetermined number of fiber optic connectors of a first type. The adapter frame further comprises: a plurality of parking elements arranged in a row that is adjacent to the row of fiber optic adapters, the plurality of parking elements being configured to receive the predetermined number of fiber optic connectors of the first type in a manner such that each of the fiber optic connectors can be stored adjacent to one of the fiber optic adapters.

Aspects of this disclosure also provide a fiber optic cable management apparatus comprising an adapter frame configured for coupling to a mount. The adapter frame comprises: a row of adapter openings each configured to receive a fiber optic adapter for receiving one or more fiber optic connectors of a first type; and a row of parking elements adjacent to the row of adapter openings, each parking element corresponding to one of the adapter openings. Each parking element is shaped for receiving a fiber optic connector of the first type to store the fiber optic connector when the fiber optic connector is removed from the fiber optic adapter in the corresponding adapter opening.

Aspects of this disclosure also provide a fiber optic cable management terminal comprising: a housing; one or more mounts coupled to the housing or integrally formed with the housing; and at least one adapter frame coupled to one of the one or more mounts. The adapter frame comprises: a row of adapter openings each configured to receive a fiber optic adapter for receiving one or more fiber optic connectors of a first type; and a row of parking elements adjacent to the row of adapter openings, each parking element corresponding to one of the adapter openings; wherein each parking element is shaped for receiving a fiber optic connector of the first type to store the fiber optic connector when the fiber optic connector is removed from the fiber optic adapter in the corresponding adapter slot.

Aspects of this disclosure also provide a fiber management apparatus comprising: an adapter frame configured for coupling to a base; wherein the adapter frame comprises: a row of adapter openings each configured to receive a fiber optic adapter; and a row of parking elements proximate or adjacent to the row of adapter openings, each parking element corresponding to one of the adapter openings and configured for storing a fiber optic connector when the fiber optic connector is removed from a fiber optic adapter in the corresponding adapter opening.

The present invention allows fiber optic connectors to be parked in the parking elements when not in use, i.e. when not making a fiber optic connections with the fiber optic adapter in the adjacent adapter opening. The present invention simplifies the parking of unused connectors (for example inside a fiber management terminal) by integrating the parking features directly on the adapter frame and located directly next to the adapter openings. Locating the parking elements next to the fiber optic adapter openings on the same adapter frame prevents the need for additional fiber optic cable (e.g. pigtail) slack to allow movement between the adapter opening and parking element.

Further, each fiber optic adapter has a designated corresponding parking element located adjacent to that adapter. This prevents issues arising from first and last fiber optic adapters at opposing ends of the row of adapter openings needing different amounts of cable slack, as would be the case if the first and last adapter openings shared a common parking location, as one adapter opening would be much further away from the parking element than the other adapter opening. Instead, each connected fiber optic cable requires only minimal slack, as the distance between the fiber optic adapter and corresponding parking element (and therefore the movement required by the fiber optic connector and attached fiber optic cable) is very small.

Further, in embodiments of the invention, the adapter frame is movably coupled to the mount, to allow the adapter frame to move up and down and rotate between stowed and working positions, along with the fiber optic connectors and fiber optic adapters disposed therein. The stowed position stores the adapter frame and fiber optic connectors and adapters in a very space efficient manner, however this is to the detriment of accessibility. The ability to move the adapter frame to the working position provides for better finger access for a technician, e.g. during modification or maintenance of the fiber optic connections in the adapter frame, whilst preventing over-tensing of the fiber optic cables due to the controlled movement provided by the movable coupling. Further, the adapter openings and parking elements and integrated on the same adapter frame, and thus move together, further preventing any over tensing of the fiber optic cables.

Advantageous embodiments of the invention also allow the adapter frame to be locked in the working position, even against the action of gravity, to allow stable access to the fiber optic connections without over-tensing of the fiber optic cables.

### BRIEF DESCRIPTION OF THE DRAWINGS

Embodiments of the invention will now be described in relation to the accompanying drawings, in which:
Figure 1A shows a fiber optic cable management apparatus according to an embodiment of the present invention in a stowed position;
Figure 1B shows a fiber optic cable management apparatus according to an embodiment of the present invention between a stowed position and a working position;
Figure 1C shows a fiber optic cable management apparatus according to an embodiment of the present invention in a working position;
Figure 2A shows a rear view of an adapter frame in an embodiment of the present invention;
Figure 2B shows a rear perspective view of an adapter frame in an embodiment of the present invention;
Figure 2C shows a front perspective view of an adapter frame in an embodiment of the present invention;
Figure 2D shows a front perspective view of an adapter frame in an embodiment of the present invention;
Figure 2E shows a fiber optic cable management apparatus according to an embodiment of the present invention having fiber optic adapters and fiber optic connectors disposed therein;
Figure 3A shows a rear view of an adapter frame in an embodiment of the present invention;
Figure 3B shows a rear perspective view of an adapter frame in an embodiment of the present invention;
Figure 3C shows a front perspective view of an adapter frame in an embodiment of the present invention;
Figure 3D shows a front perspective view of an adapter frame in an embodiment of the present invention;
Figure 3E shows a fiber optic cable management apparatus according to an embodiment of the present invention having fiber optic adapters and fiber optic connectors disposed therein;
Figure 4A shows a close up view of the adapter frame of Figure 2C with fiber optic connectors disposed therein;
Figure 4B shows a close up view of the adapter frame of Figure 2C;
Figure 4C shows a cross-sectional view of Figure 4A;
Figure 5A shows a close up view of the adapter frame of Figure 3C with fiber optic connectors disposed therein;
Figure 5B shows a close up view of the adapter frame of Figure 3C;
Figure 5C shows a cross-sectional view of Figure 5A;
Figure 6A shows a fiber optic cable management apparatus according to an embodiment of the present invention in a stowed position;
Figure 6B shows a close up view of a locking mechanism in a fiber optic cable management apparatus according to an embodiment of the present invention;
Figure 6C shows a close up view of a locking mechanism in a fiber optic cable management apparatus according to an embodiment of the present invention;
Figure 6D shows a close up view of a locking mechanism in a fiber optic cable management apparatus according to an embodiment of the present invention;
Figure 6E shows a close up view of a locking mechanism in a fiber optic cable management apparatus according to an embodiment of the present invention;
Figure 6F shows a close up view of a locking mechanism in a fiber optic cable management apparatus according to an embodiment of the present invention;
Figure 6G shows a close up view of a locking mechanism in a fiber optic cable management apparatus according to an embodiment of the present invention;
Figure 7A shows a side view of a fiber optic cable management apparatus according to an embodiment of the present invention mounted within a fiber optic cable management terminal;
Figure 7B shows a perspective view of a fiber optic cable management apparatus according to an embodiment of the present invention mounted within a fiber optic cable management terminal.

### DETAILED DESCRIPTION

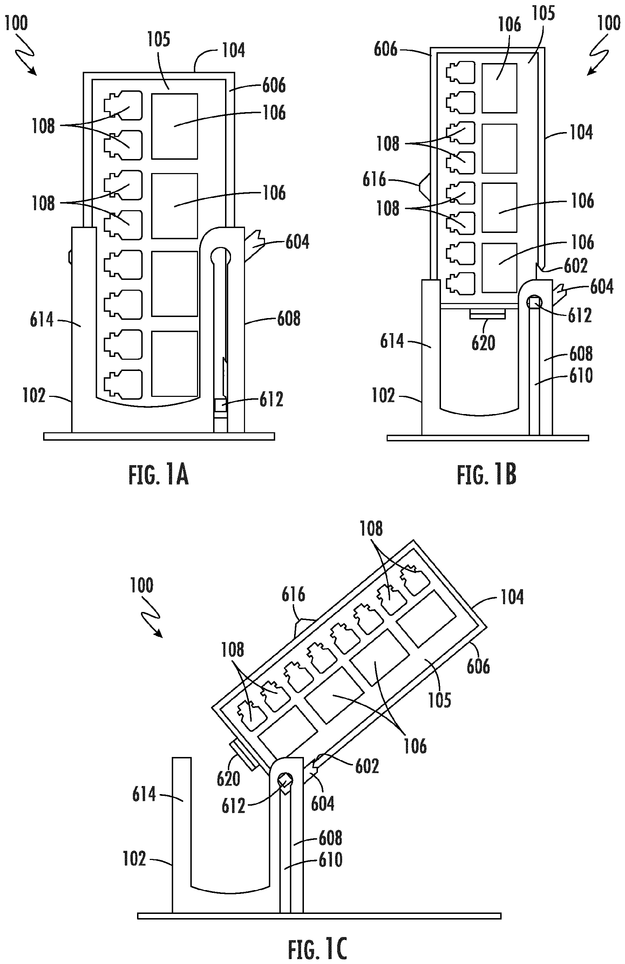

Figures 1A to 1C show a fiber optic cable management apparatus 100 according to an embodiment of the present invention.

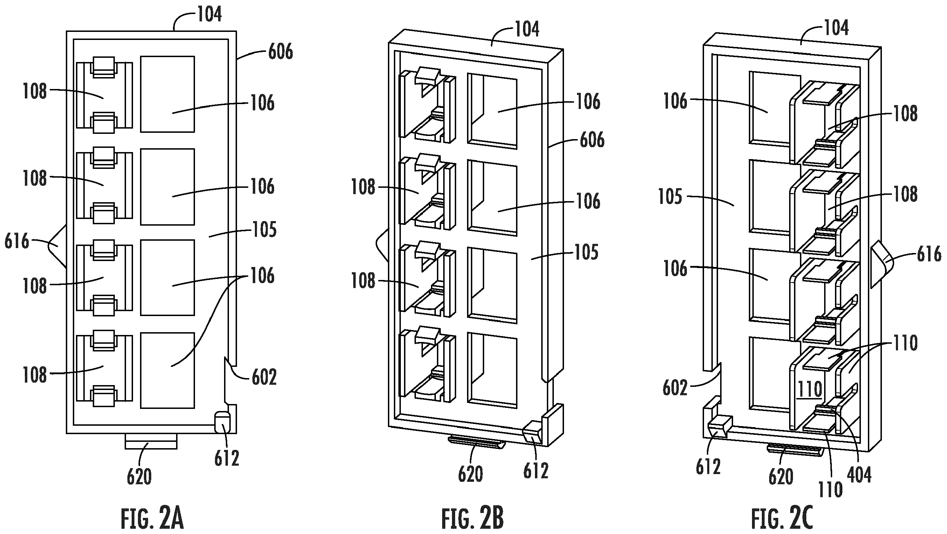

The fiber optic cable management apparatus 100 includes a mount 102, also referred to as a base 102 herein, and an adapter frame 104 coupled to (mounted on) the mount 102. The adapter frame 104 may also be referred to as a patch panel or adapter panel herein, and is configured to receive a plurality of fiber optic adapters to enable connections to be made between fiber optic connectors of various fiber optic cables within the system. Specific details of adapter frames 104 in possible embodiments according to this disclosure will be discussed in more detail below with reference to Figures 2A to 5C.

The mount 102 acts as a support for fixing the adapter frame 104 in the intended location within a fiber optic management system. For example, the mount 102 can be configured for securing to a wall or the like within a building, to fix the adapter frame 104 to the wall. Alternatively, the mount 102 can be configured for fixing to a designated location within a fiber optic terminal, such as multi-dwelling unit (MDU) terminal or the like, to fix the adapter frame 104 in position inside the fiber optic terminal. In some cases, the mount 102 may be integrally formed with the fiber optic terminal, i.e. formed as part of a housing or interior walls of the fiber optic terminal, to allow the adapter frame 104 to be held by the mount 102 at that position within the fiber optic terminal.

In general, any mounting means may be used as the mount 102 to fix the adapter frame 104 in place, including mounting features which are rigidly (fixedly) connected to the adapter frame and mounting location (e.g. wall or location within a fiber optic terminal). Further, in some embodiments the adapter frame 104 itself may be directly coupled to the mounting location, e.g. wall or location within a fiber optic terminal, without the use of a mount. In the case of a fiber optic terminal, the adapter frame 104 may itself be integrally formed with the fiber optic terminal in some embodiments, i.e. formed as part of a housing or interior walls of the fiber optic terminal.

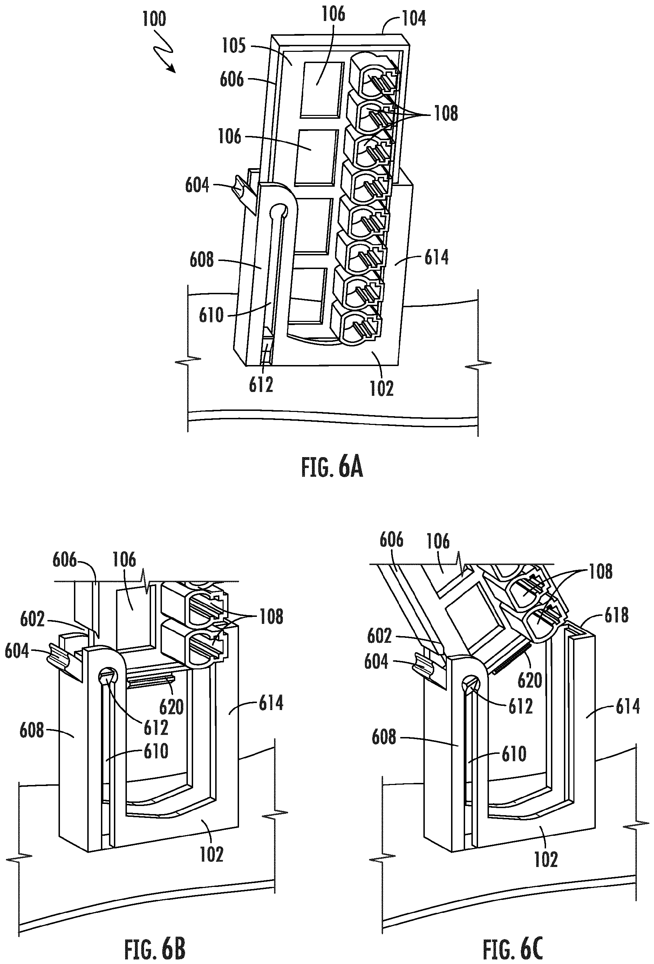

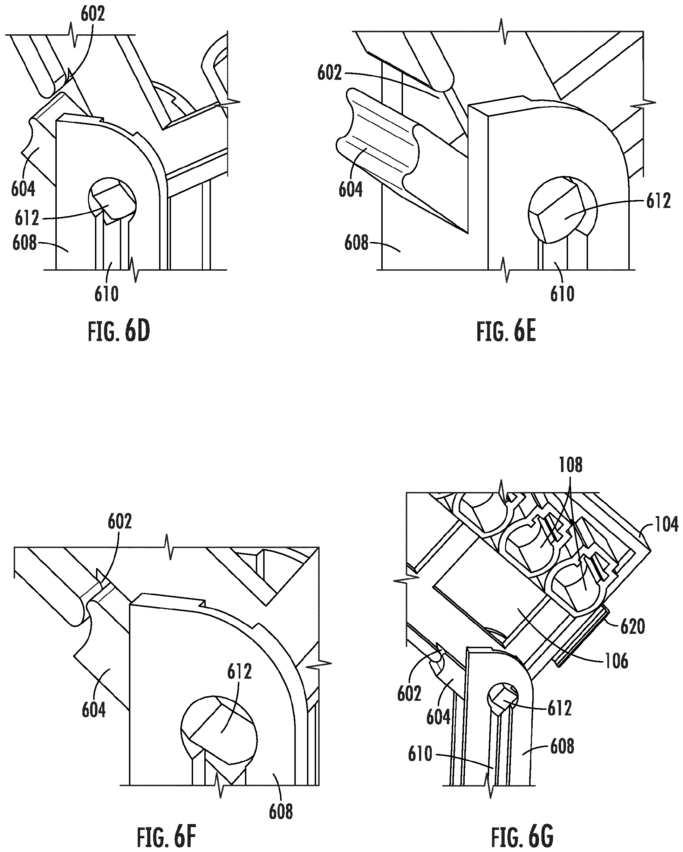

In the present embodiment of Figures 1A to 1C, a mount 102 is included and the adapter frame 104 is movably coupled to the mount 102, such that the adapter frame can be moved from a stowed position to a working position. Figure 1A shows the adapter frame in the stowed position, Figure 1B shows the adapter frame in the process of being moved between the stowed position and the working position, and Figure 1C shows the adapter frame in the working position. Specific details of the mount 102 and the movable coupling between the adapter frame 104 and mount 102 will be discussed in more detail below with reference to Figures 6A to 7B.

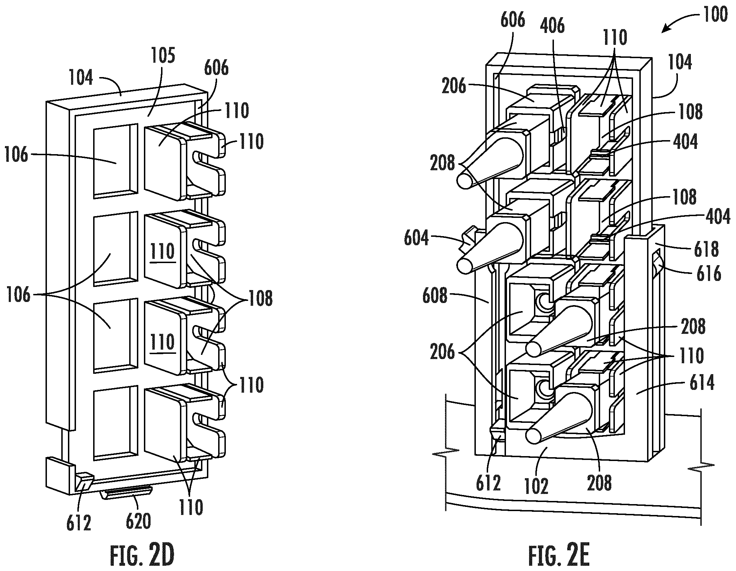

Figures 2A to 2D show an adapter frame 104 according to one example embodiment. Figure 2A is a rear view of the adapter frame, Figure 2B is a perspective view of the rear of the adapter frame, and Figures 2C and 2D are perspective views of the front of the adapter frame.

The adapter frame 104 has a rectangular shape in the present embodiment, defined primarily by a panel wall 105. Other shapes of adapter frame may be used, depending on the specific application. The adapter frame includes a row of adapter openings 106 (also referred to as cutouts or slots), and a row of parking elements 108 directly adjacent to the row of adapter openings 106. In the embodiment shown in Figures 2A to 2D, the row of adapter openings 106 and row of parking elements 108 run in parallel along a longitudinal axis of the rectangular adapter frame 104, however other layouts are possible for the adapter openings 106 and parking elements 108, provided they are adjacent to one another.

In the present embodiment, the adapter frame 104 includes four adapter openings 106 in a row, however in general any number of adapter openings may be included in the row of adapter openings 106.

Each of the adapter openings 106 is configured to receive a fiber optic adapter of a particular type (first type). In the present embodiment of Figures 2A to 2D, the adapter openings are configured to receive SC-type fiber optic adapters (e.g., according to IEC 61754-4). In the embodiment of Figures 2A to 2D, the adapter openings are rectangular cut-outs in the panel of the adapter frame 104 through which SC-type fiber optic adapters with a rectangular cross-section are inserted. However cut-outs of any shape may be used in general, depending on the shape of the fiber optic adapter to be received. In some embodiments, the fiber optic adapters may include clips or latches or barbs or the like, which engage with the rim of the cut-outs to hold the fiber optic adapters within the adapter openings 106. Alternatively, in some embodiments the adapter openings 106 may themselves include a mechanism such as clips or latches or the like (not shown in the Figures) which engage with a fiber optic adapter inserted through the cut-out.

As shown in Figures 2A to 2D, each adapter opening 106 has a corresponding parking element 108 next to (adjacent to) that adapter opening. In the present embodiment there is one parking element 108 for each adapter opening 106, and therefore four parking elements are included in the adapter frame 104. Each of the parking elements 108 are shaped for receiving a fiber optic connector of the same type as the type of fiber optic adapter received by the adapter openings 106 (i.e. the first type). For example, in the embodiment of Figures 2A to 2D where the adapter openings are shaped to receive SC-type fiber optic adapters, the parking elements 108 are shaped to receive SC-type fiber optic connectors (e.g., according to IEC 61754-4). Put another way, the parking elements 108 and fiber optic adapters received in the adapter openings 106 have complimentary shapes for receiving the same type of fiber optic connector.

For example, Figure 2E shows the same view of the adapter frame as shown in Figure 2C, but further includes fiber optic adapters and fiber optic connectors received in the adapter openings 106 and parking elements 108. In particular, Figure 2E shows an SC-type fiber optic adapter 206 received within each of the adapter openings 106. Further, two SC-type fiber optic connectors 208 are received in the upper two fiber optic adapters 206 in the view of Figure 2E, a well as two SC-type fiber optic connectors 208 received in the lower two parking elements 108 in the view of Figure 2E. The adapter frame 104 is also received in a mount 102 in Figure 2E.

As seen in Figure 2E, due to the parking elements 108 and fiber optic adapters 206 received in the adapter openings 106 having matching shapes (i.e. configured for receiving matching types of fiber optic connector), a fiber optic connector 208 can be disconnected from the fiber optic adapter 206 in a particular adapter opening 106, and positioned within the corresponding parking element 108 for that adapter opening 106. In this way, the parking elements 108 provide a parking function for the fiber optic connectors 208, i.e. provide a location in which each fiber optic connector 208 can be received and stored when the fiber optic connector is removed from the fiber optic adapter 206 in the corresponding adapter opening 106. It can be desirable to store fiber optic connectors disconnected from the fiber optic adapters in various situations, such as during reconfiguration of the connections made using the adapter frame 104, during cleaning of the fiber optic adapters and/or connectors, or if a certain fiber optic connection does not yet need to be made.

As discussed above, the parking elements 108 are each adjacent to a corresponding adapter opening 106. The adapter frame 104 therefore includes integrated parking elements 108 next to corresponding adapter openings 106, in a compact and efficient arrangement. Having each parking element 108 next to its corresponding adapter opening is particularly beneficial, as it allows a fiber optic connector to be unplugged from one of the fiber optic adapters 206 in the adapter openings 106 and stored immediately adjacent in the parking element 108 corresponding to that adapter opening 106. As well as being very convenient for the technician modifying the fiber optic connections, this also means that no extra cable slack needs to be provided to allow movement of the fiber optic connector 208 between a fiber optic adapter 206 and corresponding parking element 108.

In the present embodiment, when each fiber optic adapter 206 is received in an adapter opening 106, the fiber optic adapter passes through the panel wall 105 to enable connections between fiber optic connectors 208 on either side of the panel wall 105. In the present embodiment, parking elements 108 are only included on one side of the panel wall 105, to enable parking of the fiber optic connectors 208 on that side of the panel wall 105 only. However, in other embodiments, parking elements 108 may be provided on both sides of the panel wall 105 to allow for parking of the fiber optic connectors 208 connected to either side of the fiber optic adapters 206.

In some embodiments, the adapter frame 104 can be prefabricated with the adapter openings 106 having the fiber optic adapters 206 received therein. This can be beneficial as it prevents a technician using the adapter frame 104 from having to insert each fiber optic adapter 206 into the respective adapter opening 106 on site.

Although SC-type connectors and adapters are used in the embodiment of Figures 2A to 2E above, the invention can be applied to any type of fiber optic connector or adapter in general, including LC connectors (e.g., according to IEC 61754-20), SC connectors (as described above), ST connectors (e.g., according to IEC 61754-2), MPO connectors (e.g., according to IEC 61754-7), or the like. When such alternative types of connector and adapter are used, the shape of the adapter openings 106 and parking elements 108 in Figures 2A to 2E can be modified so that the adapter openings 106 can receive the required type of fiber optic adapter, and the parking elements can receive the required type of fiber optic connector (of the same type as the fiber optic adapter).

Further, in the embodiment of Figures 2A to 2E simplex SC fiber optic adapters and connectors are used. This means that each fiber optic adapter 206 received within the adapter openings 106 is configured to receive a single fiber optic connector 208, and each adapter opening 106 has one single corresponding parking element 108 for storing the fiber optic connector when it is not coupled to the fiber optic adapter. However, in general duplex type fiber optic adapters and connectors may also be used.

When duplex type fiber optic connections are used, each adapter opening 106 is configured to receive a duplex fiber optic adapter. A duplex fiber optic adapter is configured to establish two-fiber connections (e.g., each side of the duplex fiber optic adapter may receive two simplex fiber optic connectors or one duplex fiber optic connector). Each adapter opening 106 may then have more than one corresponding parking element 108. Specifically, each adapter opening 106 has two corresponding parking elements 108, one for storing each of two simplex fiber optic connectors received by the duplex fiber optic adapter, and/or the two parking elements 108 being configured to receive a single duplex fiber optic connector.

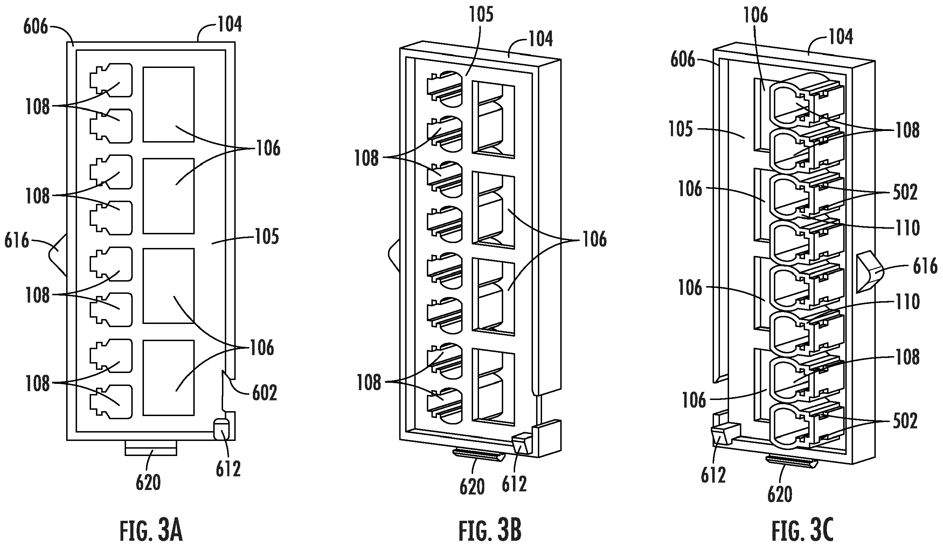

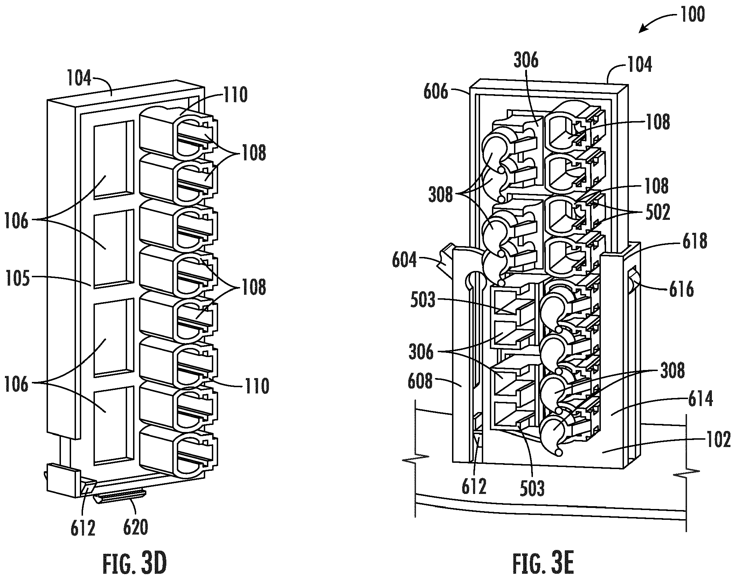

For example, Figures 3A to 3E show an adapter frame 104 in another embodiment of the present invention. The adapter frame of Figures 3A and 3E is the same as that shown in Figures 1A to 1C. The adapter frame 104 of Figures 3A to 3E is largely identical to that of Figures 2A to 2E, and therefore a repeat description of identical features will be omitted. However, the adapter frame 104 of Figures 3A to 3E differs in that duplex LC-type fiber optic adapters and connectors are used. Specifically, in Figures 3A to 3E each of the adapter openings 106 is configured to receive a duplex LC adapter. Further, each adapter opening 106 has two corresponding adjacent parking elements 108, with each parking element shaped to received one simplex LC-type fiber optic connector (or the two parking elements together being configured to receive one duplex LC-type fiber optic connector).

Figure 3E in particular shows the adapter frame 104 with duplex LC fiber optic adapters 306 in each adapter opening 306 and pairs of LC fiber optic connectors 306 received in or adjacent to the fiber optic adapters 306. Pairs of the LC fiber optic connectors 306 may be held together in a duplex configuration and therefore considered to be subassemblies of a LC duplex fiber optic connector assembly. Alternatively, each LC fiber optic connector 306 may be provided separately as a respective simplex connector. In Figure 3E, two LC fiber optic connectors 308 are received in the upper fiber optic adapter 306, and two LC fiber optic connectors 308 are received in the fiber optic adapter 306 second from the top in the view of Figure 3E. Further, Figure 3E shows two LC fiber optic connectors 308 received in the lower pair of parking elements 108, and two LC fiber optic connectors 308 received in pair of parking elements 108 corresponding to the adapter opening 106 second from the bottom in the view of Figure 3E.

In general, any connector type may be used, e.g. SC simplex, SC duplex, LC simplex, LC duplex or the like. In the case of simplex fiber optic adapters, each adapter opening has a single corresponding parking element configured to receive a simplex fiber optic connector. In the case of duplex fiber optic adapters, each adapter opening has a pair of corresponding parking elements configured to receive two simplex fiber optic connectors or a duplex fiber optic connector. Further, in some embodiments, a fiber optic adapter configured to make four fiber optic connections, i.e. able to receive up to four simplex fiber optic connectors or two duplex fiber optic connectors, may be received in an adapter opening. In such an embodiment, four parking elements are provided for the adapter opening. Further, in some embodiments, multiple fiber optic adapters can be connected together in a single group (e.g. ganged fiber optic adapters) and received within an adapter opening. In such a case, the number of parking elements provided for that adapter opening is equal to the total number of fiber optic connectors enabled by the group of fiber optic adapters.

In general, however many fiber optic connectors a fiber optic adapter or adapters in an adapter opening can receive is equal to the number of parking elements corresponding to that adapter opening. Therefore each parking element in the row of parking elements 108 corresponds to one of the adapter openings in the row of adapter openings 106, but each adapter opening can have multiple parking elements corresponding to that adapter opening. Further, the total number of parking elements 108 on the adapter frame 104 is equal to the total predetermined number of fiber optic connectors that can be received by all fiber optic adapters received in the row of adapter openings.

Providing a separate parking element 108 for every fiber optic connector that can be received by the fiber optic adapters in the row of adapter openings 106 is beneficial, as it means that every fiber optic connector can be stored (parked) if needed. Further, this arrangement allows each fiber optic connector to have respective parking element (or elements in the case of duplex fiber optic connectors) which is located directly adjacent to the adapter opening holding an adapter into which that connector is received. This prevents the need for additional slack to be provided for the fiber optic cables connected to any of the fiber optic connectors, as well as minimising the distance that the user needs to move a fiber optic connector when storing it in the integrated connector parking elements 108. In particular, this configuration prevents issues arising from the first and last adapter openings at opposing ends of the row of adapter openings needing connecting cabled with different amounts of slack, as would be the case if the first and last adapter openings shared a common parking location, as one adapter opening would be much further away from the parking element than the other adapter opening. Instead, in the present invention each connected fiber optic cable requires only minimal slack, as the distance between the adapter opening and corresponding parking element (and therefore the movement required by the fiber optic connector and attached fiber optic cable) is very small.

In each of the embodiments shown in Figures 2A to 2E and 3A to 3E, the parking elements have a geometry shaped to receive a fiber optic connector of the same type as the fiber optic adapter in the corresponding adapter opening, i.e. SC or LC in the present embodiment. Further, in the present embodiments, the orientation of each of the parking elements is complimentary to the orientation in which a fiber optic adapter is received by the adapter opening that the parking element corresponds to, such that the fiber optic connector can be received in the same orientation by both the parking element 108 and the adapter 206, 306 in the corresponding adapter opening 106. In other words, each fiber optic adapter 206, 306 is configured to receive a fiber optic connector 208, 308 in a first orientation when received in an adapter opening 106, and each corresponding parking element 108 is shaped to receive a fiber optic connector 208, 308 in the same first orientation. Because of this parking element geometry, the orientation of the fiber optic connector 208, 308 can be maintained when moving the fiber optic connector between a fiber optic adapter in an adapter opening and the corresponding parking element for that adapter opening. This advantageously means that there is no need to rotate the fiber optic connector when moving it to storage in the parking element, making it easier and simpler for an operator to park the fiber optic connector.

In both the embodiments of Figures 2A to 2E and 3A to 3E, the parking elements 108 are in the form of a socket in which the fiber optic connectors 208, 308 can be received. Specifically, each parking element 108 includes one or more wall sections 110 protruding away from the plane of panel wall 105 of the adapter frame 104 to form a socket for receiving the fiber optic connector. The wall sections 110 may be formed integrally with the panel wall 105 in some embodiments. The wall sections 110 form a perimeter wall around the parking element 108, which is shaped based on the type of connector which the parking element is configured to receive, so as to surround/encompass the fiber optic connector 208, 308 when it is received in the parking element. Put another way, each of the parking elements 108 is formed as a socket having the same shape and size as the type of fiber optic adapter received in the corresponding adapter opening. In this way, the socket of the parking element 108 can be thought of as a dummy adapter, i.e. having the same shape and size as the type of fiber optic adapter received by the corresponding adapter opening, but not including any of the necessary hardware for actually making a fiber optic connection with the fiber optic connector.

For example, in the embodiment of Figures 2A to 2E the parking elements 108 each include four wall sections 110 forming four sidewalls of a rectangular-shaped socket. The rectangular-shaped socket has the same shape and size as the cross-sectional profile of an SC-type fiber optic connector, such that an SC connector can be positioned and stored within the cavity formed within the wall sections 110. In the embodiment of Figures 3A to 3E, the parking elements 108 each include a single wall section 110 that forms a perimeter wall of a socket having a shape matching the cross-sectional profile of an LC fiber optic connector, such that an LC connector can be positioned and stored within the cavity enclosed by the wall section 110. In general, each parking element 108 may include a single continuous wall section 110 or multiple wall sections 110 to encompass the fiber optic connector.

The wall sections 110 of the embodiments of Figures 2A to 3E help to support the fiber optic connectors 208, 308 and prevent the fiber optic connectors from falling out of the parking elements when stored, improving the usability of the fiber optic management apparatus 100. Further, as the wall sections 110 extend away from the adapter frame 104, the fiber optic connector protrudes further away from the adapter frame when parked (stored) in the parking element socket, which provides better finger access to the fiber optic connector and thus makes removal of the connector from the parking element easier.

In alternative embodiments, the wall sections may be omitted and other configurations for the parking elements may be used. For example, in some cases, the parking elements may be formed as cutouts in the adapter frame 104 only. The cutouts can be shaped to match the cross-sectional profile of the type of fiber optic connector received by the fiber optic adapter in the corresponding adapter opening, such that the fiber optic connector can be pushed through the cutout and held in place by the rim of the cutout.

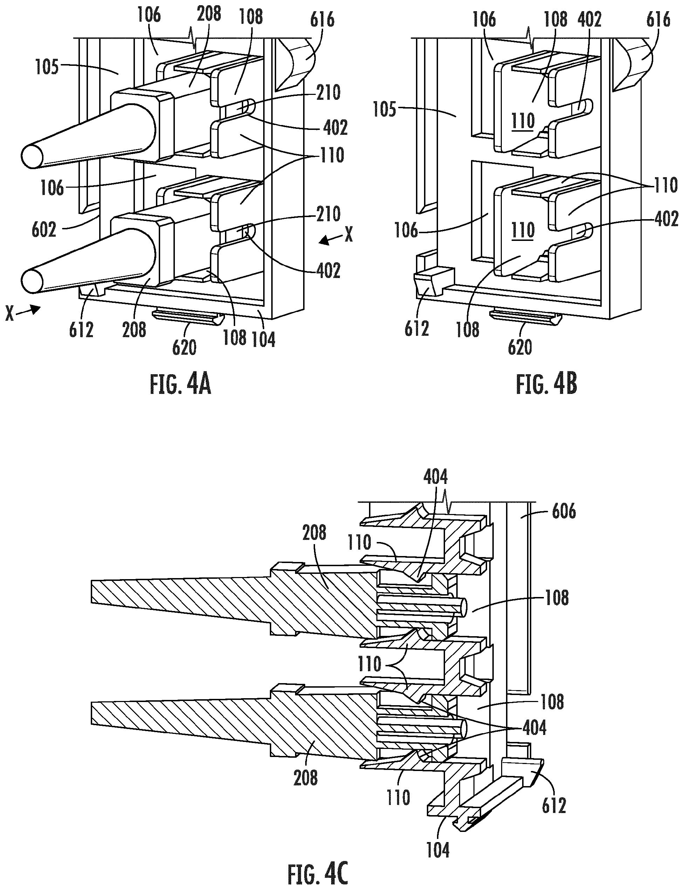

Figures 4A to 4C show the parking elements of the SC-type embodiment of Figures 2A to 2E in more detail. In particular, Figure 4A shows a close-up view of the parking elements 108 on the lower half of the adapter frame 104 with fiber optic connectors 208 disposed therein. Figure 4B is the same as Figure 4A, except that the fiber optic connectors have been removed. Figure 4C shows a cross-section through the row of parking elements 108 and fiber optic connectors 208 of Figure 4A (i.e. in the direction marked X on Figure 4A).

As shown in Figure 4A, the parking elements 108 include a number of engagement elements for engaging with the fiber optic connectors when stored in the parking elements. The engagement elements are configured based on the type of fiber optic connector which the parking element 108 will receive, i.e. the type of fiber optic connector received by a fiber optic adapter received by the corresponding adapter opening 106. Specifically, in the present embodiment where SC-type connectors are used, the parking element includes a slot 402 (first engagement element) to engage with a protrusion 210 on an SC-type fiber optic connector 208. When the SC connector 208 is received by the parking element 108, the protrusion 210 is seated into the slot 402 to align the SC connector within the socket of the parking element 108.

The slot 402 in the embodiment of Figures 4A to 4C also acts as a stop feature, preventing the SC fiber optic connector 208 from being inserted into the parking element 108 beyond the stop feature. Specifically, the protrusion 210 on the SC connector slides into the slot 402 on insertion of the fiber optic connector 208 into the parking element 108, until the protrusion 210 reaches the end of the slot 402 and is prevented from sliding any further by the end of the slot 402. This prevents the fiber optic connectors from being pushed too far into the parking elements 108, thus ensuring that the ends of the fiber optic connectors protrude from the socket of the parking elements 108 when parked so that the fiber optic connectors can be easily removed from the parking elements 108 if needed.

Further, as best seen in the cross-sectional view of Figure 4C, the parking element includes a pair of protrusions 404 (second engagement element) located on opposing wall sections 110 of the parking element socket, to engage with corresponding indents on the SC-type fiber optic connector 208. When the SC connector 208 is received by the parking element 108, the protrusions 404 engage with the indents on the SC connector to grip the SC connector 208 and prevent it falling out of the parking element 108.

The wall sections 110 having the protrusions 404 may be flexibly connected to the adapter frame 104, so that the wall sections 110 can be forced apart as the connector 208 is inserted into the parking element 108 and then return back to their original positions when the protrusions 404 seat into the indents in the SC connector. In this way, the wall sections 110 allow the protrusions 404 to releasably grip the SC connector. The protrusions 404 therefore act as retaining features, retaining the fiber optic connector 208 within the parking element 108.

It is noted that the engagement elements 402, 404 in the parking elements 108 of the present embodiment mimic similar features (adapter engagement elements) found in an SC-type fiber optic adapter for aligning and gripping an SC fiber optic connector when coupling to the fiber optic adapter. Therefore the socket of the parking element 108 can be thought of as a dummy adapter, i.e. having the same shape and size and engagement elements as the type of fiber optic adapter received by the corresponding adapter opening, but not including any of the necessary hardware for actually making a fiber optic connection with the fiber optic connector.

As best shown in Figure 2E, each of the engagement elements 402, 404 in the parking element 108 is arranged in the same orientation as the equivalent adapter engagement elements in the SC fiber optic adapter 206 when the fiber optic adapter is received in the corresponding adapter opening 106. Specifically, as seen in Figure 2E, the slot 406 in the fiber optic adapter 206 is oriented in the same side as the slot 402 in the parking element 108. This again means that there is no need to rotate the fiber optic connector 208 when moving it to storage in the parking element 108, making it easier and simpler for an operator to park the fiber optic connector.

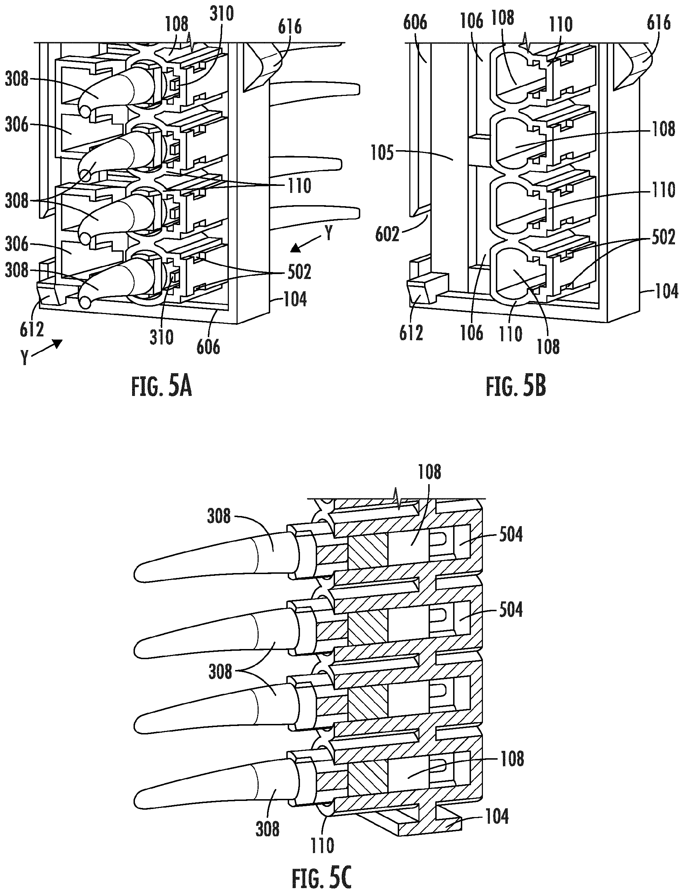

Figures 5A to 5C similarly show the parking elements of the LC-type embodiment of Figures 3A to 3E in more detail. In particular, Figure 5A shows a close up view of the parking elements 108 on the lower half of the adapter frame 104 with fiber optic connectors 308 and adapters 306 disposed therein. Figure 5B is the same as Figure 5A, except that the fiber optic connectors and adapters have been removed. Figure 5C shows a cross-section through the row of parking elements 108 and fiber optic connectors 308 of Figure 5A (i.e. in the direction marked Y on Figure 5A).

Again, the parking elements are designed based on the features of the type of fiber optic connector being used. In the embodiment of Figures 5A to 5C where LC-type connectors are used, the parking element includes engagement elements 502 to engage with a latch 310 on an LC-type fiber optic connector 308. When the LC connector 308 is received by the parking element 108, the latch 310 is seated into the engagement elements 502 to both align and grip the LC connector within the socket of the parking element 108. Again, the engagement elements 502 in the parking elements 108 of the present embodiment mimic similar features (adapter engagement elements) found in an LC-type fiber optic adapter for aligning and gripping an LC fiber optic connector when coupling to the fiber optic adapter. Therefore the socket of the parking element 108 can again be thought of as a dummy adapter of the type held by the corresponding adapter opening 106 (i.e. LC).

Again, as best shown in Figure 3E, the engagement elements 502 in the parking element 108 are arranged in the same orientation as the equivalent adapter engagement elements 503 in the LC fiber optic adapter 206 when the fiber optic adapter is received in the corresponding adapter opening 106, to prevent the need for rotation of the fiber optic connector 308 when moving it to storage in the parking element 108, making it easier and simpler for an operator to park the fiber optic connector. Specifically, in the present embodiment the latch/trigger of the LC fiber optic connector 308 is received on the same side of both the parking element 108 and the fiber optic adapter 306 (when the fiber optic adapter 306 is received in the corresponding adapter opening 106).

The parking element 108 in the present embodiment also includes a stop feature 504, best seen in the cross-sectional view of Figure 5C. The stop feature 504 is a closing wall at the end of the parking element socket, which prevents the LC fiber optic connectors 308 from being inserted into the parking elements 108 beyond the closing wall. This prevents the fiber optic connectors from being pushed too far into the parking elements 108, thus ensuring that the ends of the fiber optic connectors protrude from the socket of the parking elements 108 when parked so that the fiber optic connectors can be easily removed from the parking elements 108 if needed.

Other types of engagement elements and stop features may be used in the parking elements 108 in alternative embodiments, depending on the specific type of fiber optic connectors being used.

Specific details of the mount 102 as well as the movable coupling between the adapter frame 104 and mount 102 in embodiments of the fiber optic cable management apparatus 100 will now be discussed with reference to Figures 6A to 7B. Figures 6A to 7B show the mount 102 coupled with the LC-type adapter frame embodiment of Figures 3A to 3E. However the SC-type adapter frame embodiment of Figures 2A to 2E (or adapter frames for other types of fiber optic connectors) may analogously be used with the mount 102 configuration described below.

As discussed in relation to Figures 1A to 1C, the adapter frame 104 is movable relative to the mount 102 between a stowed position and a working position. Figure 6A shows the fiber optic cable management apparatus 100 with the adapter frame 104 in the stowed position (from the opposite direction to the view in Figure 1A). As seen in Figure 6A, the adapter frame 104 is seated within the mount 102 when in the stowed position, such that the bottom half of the adapter frame is substantially within (surrounded by) the mount 102. When in the stowed position, the optic cable management apparatus 100 has a very compact configuration, and thus takes up minimal space, e.g. within a fiber optic terminal. The adapter frame 104 can then be moved via the position shown in Figure 1B to the working position as shown in Figure 1C. In the working position, the adapter frame 104 fully protrudes from the mount 102, to enable easier access to the fiber optic adapters and connectors received by the adapter frame 104, for example by a technician when working on the fiber optic connections.

In the embodiment of Figures 6A to 6G, the mount includes a locking mechanism to releasably secure the adapter frame 104 in the working position. Figures 6B to 6E show close up views of this locking mechanism. Specifically, Figure 6B shows the locking mechanism with the adapter frame in the same position as shown in Figure 1B. Figures 6C to 6E show various close up views of the locking mechanism with the adapter frame 104 moved half way between the position shown in Figure 1B and the working position shown in Figure 1C. Figures 6F and 6G show the engaged locking machine when the adapter frame 104 is locked into working position (as shown in Figure 1C).

The locking mechanism includes a locking feature 602 (first locking feature) on the adapter frame, and a corresponding locking feature 604 (second locking feature) on the mount 102. The locking features 602, 604 are configured to engage with each other (interlock) when the adapter frame 104 is in the working position, to releasably secure the adapter frame 104 in the working position.

In the present embodiment, the locking feature 602 on the adapter frame is a notch cut in to the edge of the adapter frame 104, and the locking feature 604 on the mount 102 is a protrusion that seats into the notch 602. In the present embodiment, the adapter frame 104 has a perimeter wall 606 running around the perimeter of the adapter frame and extending perpendicularly to the panel wall 105, and the notch passes through the perimeter wall 606. The notch 602 and protrusion 604 both include curved engagement surfaces, which enable the protrusion 604 to slide into the notch 602 when a force is applied by a technician. The protrusion 604 slides into the notch 602 and is held behind a lip of the notch 602. Specifically, in the present embodiment, the lip is formed by and edge of the perimeter wall 606 at the notch 602. The notch and protrusion 602, 604 are sized such that the protrusion 604 cannot easily slide back past the lip on the notch 602 and out of the notch 602, until sufficient force is applied to force the curved surface of the protrusion 604 to slide back over the lip of the notch 602. In this way, the protrusion 604 is releasably engageable with the notch 502, to allow the adapter frame to be releasably secured in the working position.

In general, any releasable coupling could be used as the locking mechanism instead of the locking features 602, 604 of the present embodiment. For example, any type of latching mechanism may be used, or alternative mechanisms such as magnetic couplings or push fit mechanisms may be used.

The locking mechanism is useful when a technician requires access to the fiber optic adapter and connectors held by the adapter frame. When access is required, e.g. for cleaning or maintenance of the fiber optic connections, the adapter frame 104 can be moved into the working position and the locking mechanism allows the adapter frame 104 to be securely fixed in place in the working position. This prevents the adapter frame 104 from moving around when being worked on, and prevents the need for the technician to continuously hold the adapter frame 104.

Further, locking the adapter frame 104 in the working position ensures that the fiber optic connections (such as incoming and outgoing pigtails) are not damaged, for example by over-tensing the fiber optic cables. The locking mechanism holds the adapter frame 104 securely in a position where incoming and outgoing pigtails can be accessed, but are not pulled to an extent that would cause damage. This is in contrast to having an entirely removable adapter frame, for example, where the adapter frame could be pulled too far leading to damage or snapping of the fiber optic cables/connections.

In order to allow movement of the adapter frame 104 between the stowed position and the working position, the fiber optic cable management apparatus 100 of the present embodiment includes a mechanism for sliding the adapter frame 104 within the mount 102. As shown in each of Figures 1A to 1C and 6A to 6G, the fiber optic cable management apparatus 100 includes a slot and pin type coupling between the adapter frame 104 and mount 102.

Specifically, the mount 102 comprises a first pillar 608 including two opposing panels each having a slot 610 formed in (cut out of) the panel. The adapter frame 104 has a corresponding pin 612 located in the bottom corner of the adapter frame 104 and protruding from either side of the adapter frame panel wall 105 (as can be seen throughout Figures 2A to 5C also). The pin 612 on one side of the adapter frame 104 is positioned within the slot 610 of one of the panels of the pillar 608, and the pin 612 on the other side of the adapter frame is positioned within the slot 610 of the opposing panel in the pillar 608, such that adapter frame 104 is located between the opposing panels of the pillar 608 and coupled to the pillar 608 via the engagement of the pins 612 with the slots 610.

The slot and pin mechanism allows the adapter frame 104 to slide relative to the mount 102, between the stowed positioned and the working position. The slots 610 extend along the length of the pillar 608, with the pins 612 positioned at the first end of the slots 610 when the adapter frame is in the working position, as shown in Figure 6A. The pins 612 on the adapter frame 104 can be slid along to the second end of the slots, i.e. by lifting the adapter frame in the view of Figure 6A upwards until the position in Figure 6B is reached. This allows the adapter frame 104 to be extended out of the mount 102, for example during movement from the stowed position to the working position.

Further, in order to allow movement of the adapter frame 104 between the stowed position and the working position in the present embodiment, the fiber optic cable management apparatus 100 includes a mechanism for rotating the adapter frame 104 within the mount 102.

Specifically, each slot 610 includes a circular cut-out at the second end of the slot, to allow the pins 612 to rotate within the slot when the pins are positioned at the second end of the slot. This rotation of the pins 612 within the circular cut-outs allows the adapter frame 104 to rotate relative to the mount 102 when the pins are positioned at the second end of the slot, i.e. when the adapter frame is in the position of Figure 6B. The pins 612 in the present embodiment have a square cross section, to prevent rotation of the adapter frame 104 when the pins are located in other parts of the slot 610 (i.e. not at the second end).

After the adapter frame has been slid from the first end of the slot to the second end of the slot (lifted from the position of Figure 6A to Figure 6B), the movement from the stowed position to the working position is completed by rotating the adapter frame until the locking mechanism is engaged, i.e. when the protrusion 604 engages into the notch 602. In other words, the adapter frame is rotated from the position shown in Figures 1B and 6B, to the position shown in Figures 1C and 6G in order to reach (and lock into) the working position. As best seen in Figures 6E and 6G, the protrusion 604 of the locking feature on the mount 102 includes a slanted surface, which sets the angle which the adapter frame 104 is held with respect to the mount 102 when in the working position.

The movable coupling described above allows a controlled movement of the adapter frame to be made, reducing the risk of over-tensing the fiber optic cables (e.g. compared to a fully removeable adapter frame). The adapter openings and integrated parking elements on the same adapter frame move together, which can also prevent over-tensing of the fiber optic cables (e.g. compared to a case where the adapters and parking elements could be move away from each other, which could over-tense a fiber optic cable connected therebetween). Further, as discussed above, in the stowed position the adapter frame 104 and fiber optic adapters and connectors 306, 308 are stored neatly and compactly when not being accessed by a technician. The adapter frame can then be moved to the working position when required, and held in the working position to allows better access to the fiber optic connections without risk of damage to the fiber optic connections.

In the present embodiment, the slots 610 and circular cut-outs enable the movement from the stowed position to the working position by allow both a sliding and rotating movement of the adapter frame 104. Other mechanisms are possible for allowing a movable coupling between the mount 102 and adapter frame 104. For example, in some embodiments the pins 612 can have a circular cross section, which removes the need for the circular cut-outs to allow rotation. Further, in some embodiments the first pillar can include only a single panel with a slot, and the adapter frame can include a single pin on only one side of the adapter frame, with an enlarged portion at the end of the pin to ensure the pin is retained within the slot. In other embodiments, the slot could be formed on the adapter frame instead of the mount, with the mount instead having a pin fixed thereon and passing through the slot in the adapter frame to provide the movable coupling.

In other embodiments, the movable coupling between the adapter frame 104 and mount 102 may include just a slidable mechanism without any rotation to reach the working position. Alternatively, the movable coupling between the adapter frame 104 and mount 102 may include just have rotational mechanism without any sliding of to reach the working position. Lastly, as mentioned previously, in some embodiments the adapter frame 104 can simply be rigidly attached to a mount 102, rather than having a movable coupling.

Returning to the present embodiment, as shown in Figures 6A to 6C in particular, the mount 102 also includes a second pillar 614. The first and second pillars 608, 614 are spaced apart such that when the adapter frame 104 is in the stowed position the pillars 608, 614 are located against opposing edges of the adapter frame 104. Put another way, the first and second pillars 608, 614 are separated by a distance equal to the width of the adapter frame 104.

The second pillar 614 has two opposing panels (similar to the first pillar 608) such that adapter frame 104 is located between the opposing panels of the second pillar 614 when in the stowed position. In this way, the first and second pillars surround the opposing edges of the adapter frame 104 when in the stowed position. Put another way, the first and second pillars 608, 614 act as a pair of rails which receive the edges of the adapter frame when in the stowed position. In the present embodiment, the height of the pillars 608, 614 is equal to half of the height of the adapter frame 104, such that the pillars surround both edges along the entire lower half of the adapter frame when in the stowed position, as shown in Figure 6A for example.

The second pillar 614 helps support the adapter frame 104 when in the stowed position, to prevent torsion forces acting on the adapter frame which could break the movable coupling between the adapter frame 104 and the first pillar 608 in the mount 102. When moved to the working position, the adapter frame 104 slides and rotates away from the second pillar 614 such that the adapter frame is supported only via the pin 612 in the slot 610, and by the engagement of locking features 602, 604, e.g. as shown in Figure 1C. Thus neither of the first nor second pillars 608, 614 impede access to the fiber optical connections when in the working position.

As best seen in Figures 2C and 2E, in the present embodiments the adapter frame 104 includes a protrusion 616 on the edge of the adapter frame 104 received by the second pillar 614 (i.e. the edge opposite the edge of the adapter frame 104 including the pin 612). The protrusion 616 acts as a retaining feature 616 for engaging with a corresponding retaining feature 618 on the mount 102 when the adapter frame 104 is in the stowed position, to releasably secure the adapter frame to the mount. Specifically, in the present embodiment the corresponding retaining feature is a bar 618 extending between the two panels in the second pillar 614. The protrusion 616 has curved surface that strikes the bar 618 when the adapter frame 104 is pushed down into the mount 102. The protrusion 616 is able to slide past the bar 618 on application of a sufficient downwards force. The protrusion 616 then seats under the bar 618, and is held under the bar until a sufficient upwards force is applied to the adapter frame 104. The protrusion 616 and bar 618 are located such that they engage only when the adapter frame 104 is in the stowed position. In the present embodiment, this is achieved by locating the protrusion 616 half way along the height of the edge of the adapter frame, and the bar 618 at the top of the second pillar 614 which has a height equal to half of the height of the adapter frame 104. In this way, the protrusion 616 and bar 618 prevent the adapter frame 104 from sliding upwards in the mount 104 and out of the stowed position, unless a sufficient upwards force is applied to the adapter frame 104.

Further, in the present embodiment, the adapter frame 104 and mount 102 include additional retaining features to releasably secure the adapter frame to the mount when in the stowed position. Specifically, as shown best in Figures 1B and 6B, the adapter frame 104 includes a retaining feature in the form of a barbed protrusion 620 on the bottom edge of the adapter frame. When the adapter frame 104 is in the stowed position, the protrusion 620 pushes into (engages with) a corresponding retaining feature in the form of an opening (not shown in the Figures) in the bottom of the mount 102 (i.e. the portion of the mount extending between the base of the first and second pillars 608, 614). The barb on the protrusion 620 prevents the protrusion 620 being removed from the opening until a sufficient force is applied, and thus releasably holds the adapter frame 104 in the working position.

In general, in other embodiments various different types of other retaining features may be used to secure the adapter frame in place when in the stowed position. This advantageously keeps the fiber optic connections compactly and safely stored within the fiber management system.

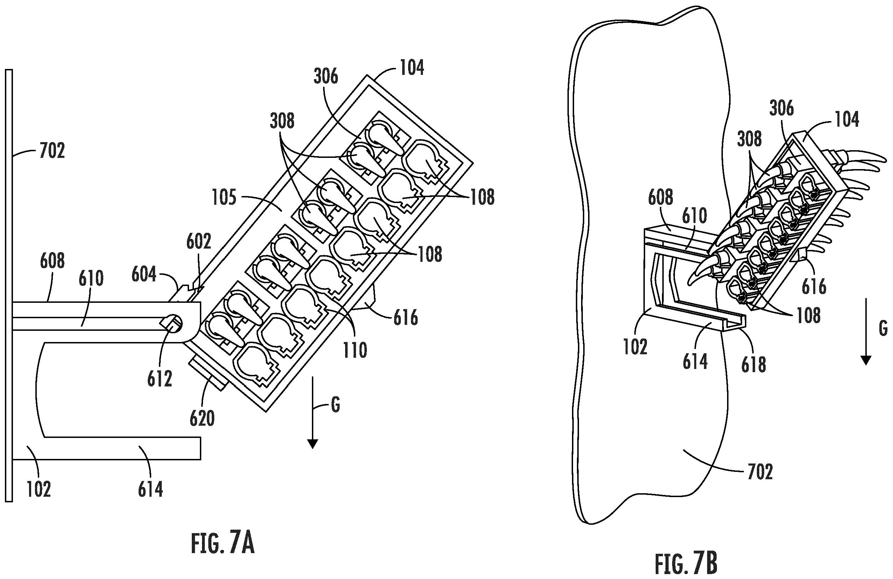

Figures 7A and 7B show side and perspective views respectively of the fiber optic cable management apparatus 100 of Figures 6A to 6G with the adapter frame 104 locked in the working position. In Figures 7A and 7B the mount 102 is shown attached to an internal wall 702 of a housing of a fiber optic cable management terminal. The fiber optic cable management terminal may be a multi-dwelling unit (MDU) terminal or the like.

As shown in Figures 7A and 7B, the mount 102 is fixed in position extending horizontally from the internal wall 702. The slanted surface of the protrusion 604 extending in an upwards direction, such that the adapter frame 104 protrudes from the mount 102 in an upwards direction when locked in the working position. Put another way, the adapter frame 104 is rotated against the action of gravity (shown by the arrow labelled G in Figures 7A and 7B) when moving from the stowed position to the working position.

The engagement of the locking features 602 and 604 when the adapter frame 104 is in the working position is sufficiently strong so as to prevent the action of gravity on the adapter frame 104 forcing the protrusion 604 to slide back past the lip on the notch 602 and out of the notch 60 (which would allow the adapter frame to rotate about the pins 612 within the circular cut-outs under the action of gravity). Therefore the locking mechanism is able to hold the adapter frame 104 in the working position even against the action of gravity. Thus the adapter frame 104 can be securely held in the working position, even if the mount 102 is oriented horizontally to the ground.

Although only one mount 102 is shown in Figures 7A and 7B, in general a fiber optic cable management terminal may include a plurality of mounts 102 within the housing (either coupled to the housing or integrally formed with the housing). In such a case the fiber optic cable management terminal can hold a plurality of adapter frames, with each adapter frame coupled to one of the plurality of mounts 102 and serving as a single patch panel within a larger fiber management system inside the terminal. Further, instead of being mounted in a fiber optic terminal, the mount 102 of the fiber optic cable management apparatus 100 may also be mounted horizontal to a wall of a building or other mounting surface wall to in some embodiments.

Although described separately, the features of the embodiments outlined above may be combined in different ways where appropriate. Various modifications to the embodiments described above are possible and will occur to those skilled in the art without departing from the scope of the invention which is defined by the following claims.

## Claims

1. A fiber optic cable management apparatus comprising:
an adapter frame having a plurality of adapter openings arranged in a row; and
a plurality of fiber optic adapters held in the plurality of adapter openings so as to be arranged in a row, the plurality of fiber optic adapters being configured to receive a predetermined number of fiber optic connectors of a first type;
wherein the adapter frame further comprises:
a plurality of parking elements arranged in a row that is adjacent to the row of fiber optic adapters, the plurality of parking elements being configured to receive the predetermined number of fiber optic connectors of the first type in a manner such that each of the fiber optic connectors can be stored adjacent to one of the fiber optic adapters.

2. The fiber optic cable management apparatus of claim 1, wherein:
each fiber optic adapter of the plurality of fiber optic adapters is configured to receive one or more of the fiber optic connectors in a first orientation; and
the plurality of parking elements are configured to receive the fiber optic connectors in the same first orientation.

3. The fiber optic cable management apparatus of any preceding claim, wherein the adapter frame comprises a panel wall defining a plane of the adapter frame, and wherein each parking element of the plurality of parking elements comprises one or more wall sections formed integrally with and protruding away from panel wall and forming a socket for receiving one of the fiber optic connectors.

4. The fiber optic cable management apparatus of claim 3, wherein each parking element comprises a stop feature within the socket configured to prevent insertion of a fiber optic connector into the socket beyond the stop feature.

5. The fiber optic cable management apparatus of any preceding claim, wherein each parking element comprises one or more engagement elements for engaging with at least one of a latch, protrusion or indent on a fiber optic connector of the first type.

6. The fiber optic cable management apparatus of claim 5, wherein:
each fiber optic adapter includes at least one adapter engagement element for engaging with at least one of a latch, protrusion or indent on a fiber optic connector of the first type; and
each parking element is arranged with the one or more engagement elements in the same orientation as the at least one adapter engagement element of the fiber optic adapter that is adjacent to the parking element.

7. The fiber optic cable management apparatus of any preceding claim, wherein either:
each of the adapter openings is configured to receive a simplex fiber optic adapter, and each adapter opening has a single corresponding parking element; or
each of the adapter openings is configured to receive a duplex fiber optic adapter, and each adapter opening has a pair of corresponding parking elements.

8. The fiber optic cable management apparatus of any preceding claim, wherein:
the fiber optic connectors of the first type are LC connectors; or
the fiber optic connectors of the first type are SC connectors.

9. The fiber optic cable management apparatus of any preceding claim, wherein the row of adapter openings and the row parking elements run in parallel along a longitudinal axis of the adapter frame.

10. The fiber optic cable management apparatus of any preceding claim, further comprising a mount, wherein the adapter frame is configured for coupling to the mount such that the adapter frame is movable relative to the mount between a stowed position and a working position.

11. The fiber optic cable management apparatus of claim 10 wherein:
the mount comprises a slot, and the adapter frame comprises a pin configured to engage with the slot to couple the adapter frame to the mount;
wherein the pin is configured to slide from a first end of the slot to a second end of the slot as the adapter frame is moved from the stowed position to the working position.

12. The fiber optic cable management apparatus of claim 11 wherein:
the adapter frame is rotatable relative to the mount when the pin is positioned at the second end of the slot; and
moving the adapter frame from the stowed position to the working position includes rotating the adapter frame after the pin has been slid to the second end of the slot.

13. The fiber optic cable management apparatus of any of claims 10 to 12, wherein the adapter frame comprises a locking feature configured to engage with a corresponding locking feature on the mount when the adapter frame is in the working position, to releasably secure the adapter frame in the working position.

14. The fiber optic cable management apparatus of claim 10 to 13, wherein the adapter frame comprises one or more retaining features configured to engage with one or more corresponding retaining features on the mount when the adapter frame is in the stowed position, to releasably secure the adapter frame to the mount in the stowed position.

15. A fiber optic cable management terminal comprising:
a housing; and
at least one fiber optic cable management apparatus coupled to the housing or integrally formed with the housing;
wherein the fiber optic cable management apparatus comprises:
an adapter frame having a plurality of adapter openings arranged in a row; and
a plurality of fiber optic adapters held in the plurality of adapter openings so as to be arranged in a row, the plurality of fiber optic adapters being configured to receive a predetermined number of fiber optic connectors of a first type;
wherein the adapter frame further comprises:
a plurality of parking elements arranged in a row that is adjacent to the row of fiber optic adapters, the plurality of parking elements being configured to receive the predetermined number of fiber optic connectors of the first type in a manner such that each of the fiber optic connectors can be stored adjacent to one of the fiber optic adapters.
